# EUROPEAN PATENT APPLICATION

(11) **EP 3 451 785 A1**
(43) Date of publication of application: **06.03.2019**
(21) Application number: 16901303.4
(22) Date of filing: 12.05.2016
(51) Int. Cl.: H04W 76/04

(54) **RESOURCE ACCESS METHOD, DEVICE AND SYSTEM**

(71) Applicant: Huawei Technologies Co., Ltd., Longgang Shenzhen, Guangdong 518129 (CN)
(72) Inventor: CHEN, Huadong, Shenzhen Guangdong 518129 (CN)
(74) Representative: Körber, Martin Hans
(86) International application number: PCT/CN2016/081921
(87) International publication number: WO 2017/193348

(57) **Abstract**

Embodiments of the present invention provide a resource access method, an apparatus, and a system. The method includes: receiving, by a serving gateway, an IP packet of UE, where the IP packet carries an IP address of a target server, the target server stores a resource to be accessed by the UE, and a first bearer corresponding to the UE exists between the serving gateway and a first packet gateway; determining, by the serving gateway based on the IP address, a second packet gateway corresponding to the target server; determining, by the serving gateway, a second bearer that is between the serving gateway and the second packet gateway and that corresponds to the UE; and sending, by the serving gateway, an access request of the UE to the second packet gateway by using the second bearer, where the access request is used to request to access the resource stored on the target server. The solutions provided in the embodiments of the present invention can avoid route recurvation of an access path, to improve resource access efficiency of the UE.

## Description

### TECHNICAL FIELD

The present invention relates to the communications field, and in particular, to a resource access method, an apparatus, and a system.

### BACKGROUND

In the prior art, with development of a Long Term Evolution (Long Term Evolution, LTE) system, cache servers are deployed on edge gateways at vaious locations in a content delivery network (Content Delivery Network, CDN). The cache server may cache a resource in a remote server. Through scheduling of a center platform, user equipment (User Equipment, UE) may obtain a resource from a nearby cache server of the edge cache servers at various locations. Usually, the UE accesses an external network through a base station, a serving gateway (Serving Gateway, SGW), and a packet data network gateway (Packet Data Network Gateway, PGW). In a case of a single packet data network (Packet Data Network, PDN) connection, the UE accesses the external network through a PGW (for example, a PGW 1). When a resource that needs to be accessed by the UE is stored in a server deployed on a PGW (for example, a PGW 2) other than the PGW 1, the PGW 1 needs to be connected to the PGW 2, to obtain the resource from the PGW 2, and then the PGW 1 sends the resource to the UE. This resource access path causes route recurvation, and is unfavorable to the UE for obtaining a resource.

### SUMMARY

The present invention provides a resource access method, a serving gateway, a packet gateway, a mobility management network element, and a system, to avoid route recurvation of an access path, and improve resource access efficiency of UE.

According to one aspect, an embodiment of the present invention provides a resource access method, including: receiving, by a serving gateway, an IP packet of UE, where the IP packet carries an IP address of a target server, the target server stores a resource to be accessed by the UE, and a first bearer corresponding to the UE exists between the serving gateway and a first packet gateway; determining, by the serving gateway based on the IP address, a second packet gateway corresponding to the target server; determining a second bearer that is between the serving gateway and the second packet gateway and that corresponds to the UE; and sending an access request of the UE by using the second bearer, where the access request is used to request to access the resource stored in the target server. In the solution provided in this embodiment of the present invention, when the first bearer corresponding to the UE exists between the serving gateway and the first packet gateway, the second bearer may be further determined between the serving gateway and the second packet gateway corresponding to the target server, and the access request of the UE is transmitted by using the second bearer, to access the resource stored in the target server. Therefore, the solution provided in this embodiment of the present invention can avoid route recurvation of an access path, to improve resource access efficiency of the UE.

In a possible design, the second bearer that is between the serving gateway and the second packet gateway and that corresponds to the UE may be determined in one of the following manners: First manner: The serving gateway determines the second bearer from at least two existing bearers, where the at least two existing bearers are bearers that are between the serving gateway and at least two packet gateways and that correspond to the UE. Second manner: The serving gateway sends a bearer setup request to the second packet gateway, where the bearer setup request is used to set up the second bearer; and the second packet gateway sets up the second bearer after receiving the bearer setup request. In the second manner, the second packet gateway may further send a bearer setup response message to the serving gateway.

In the second manner, the serving gateway may send the bearer setup request to the second packet gateway as instructed by a mobility management network element or the first packet gateway. For example, the serving gateway receives an instruction message sent by the mobility management network element or the first packet gateway, the instruction message carries an IP address of the second packet gateway, and the instruction message is used to instruct to set up the second bearer between the serving gateway and the second packet gateway. Therefore, the serving gateway may determine the IP address of the second packet gateway by using the instruction message sent by the mobility management network element or the first packet gateway, and set up the second bearer in advance as instructed by the instruction message, thereby reducing time used by the UE to access the resource.

In a possible design, the access request of the UE may be transmitted by using the second bearer in the following manner: The serving gateway sends the access request to the second packet gateway by using the second bearer; and after receiving the access request of the UE that is sent by the serving gateway by using the second bearer, the second packet gateway may further return a response message to the serving gateway, to complete a response process. After the response process is completed, the resource stored on the target server may be transmitted between the serving gateway and the second packet gateway by using the second bearer.

In a possible design, a dedicated bearer that is between the serving gateway and the second packet gateway and that corresponds to the UE may be further set up. For example, the second packet gateway may send a dedicated bearer setup request to the serving gateway, and the dedicated bearer setup request is used to set up a first dedicated bearer that is between the serving gateway and the second packet gateway and that corresponds to the UE; after receiving the dedicated bearer setup request, the serving gateway sets up the first dedicated bearer according to the dedicated bearer setup request; and the serving gateway determines a second dedicated bearer between the serving gateway and the UE. Further, the serving gateway may determine the second dedicated bearer between the serving gateway and the UE in the following manner: The serving gateway determines that a dedicated bearer exists between the serving gateway and the UE, and determines the dedicated bearer as the second dedicated bearer; or the serving gateway determines that no dedicated bearer exists between the serving gateway and the UE, and sets up the second dedicated bearer. In this way, the resource may be transmitted by using the first dedicated bearer and the second dedicated bearer, to meet transmission requirements of services with different quality of service (Quality of Service, QoS) requirements. Further, when a dedicated bearer already exists between the serving gateway and the UE, the dedicated bearer may be used as the second dedicated bearer, and no other bearers need to be set up, thereby improving bearer resource utilization, and saving a network resource.

In a possible design, the first dedicated bearer between the serving gateway and the second packet gateway may be further modified. For example, the second packet gateway may send a dedicated bearer modify request to the serving gateway, and the dedicated bearer modify request is used to request to modify the first dedicated bearer; after receiving the dedicated bearer modify request, the serving gateway modifies the first dedicated bearer according to the dedicated bearer modify request; and the serving gateway determines that a dedicated bearer corresponding to the UE exists between the serving gateway and another packet gateway other than the second packet gateway, and modifies the dedicated bearer between the serving gateway and the another packet gateway other than the second packet gateway. Therefore, when modifying the first dedicated bearer between the serving gateway and the second packet gateway, the serving gateway may also modify the dedicated bearer between the serving gateway and the another packet gateway other than the second packet gateway, to ensure communication of a dedicated bearer between the UE and the another packet gateway.

In a possible design, the first dedicated bearer between the serving gateway and the second packet gateway may be further deleted. For example, the second packet gateway may send a dedicated bearer delete request to the serving gateway, and the dedicated bearer delete request is used to request to delete the first dedicated bearer; after receiving the dedicated bearer delete request, the serving gateway deletes the first dedicated bearer according to the dedicated bearer delete request; and the serving gateway determines that no dedicated bearer corresponding to the UE exists between the serving gateway and another packet gateway other than the second packet gateway, and deletes the second dedicated bearer. Therefore, when deleting the first dedicated bearer between the serving gateway and the second packet gateway, the serving gateway may also determine whether a dedicated bearer corresponding to the UE exists between the serving gateway and another packet gateway. If the dedicated bearer exists, the serving gateway does not delete the second dedicated bearer between the serving gateway and the UE, to ensure normal communication of a dedicated bearer between the UE and the another packet gateway. If no dedicated bearer exists, the serving gateway may delete the second dedicated bearer, to release a bearer resource.

In an example of the foregoing method, the target server may be a service server, or may be a cache server. The second packet gateway and the target server may be located on a same node.

In an example of the foregoing method, the serving gateway may be an SGW or a serving general packet radio service support node (Serving General Packet Radio Service Support Node, SGSN), and the first packet gateway and the second packet gateway each may be a PGW or a gateway general packet radio service support node (Gateway General Packet Radio Service Support Node, GGSN).

According to another aspect, an embodiment of the present invention provides a serving gateway. The serving gateway has a function of implementing behavior of the serving gateway in the foregoing method design. The function may be implemented by using hardware, or may be implemented by hardware by executing corresponding software. The hardware or the software includes one or more modules corresponding to the function.

In a possible design, a structure of the serving gateway includes a processing unit and a communications unit. The processing unit is configured to support the serving gateway in performing a corresponding function in the foregoing method. The communications unit is configured to support communication between the serving gateway and another device. The serving gateway may further include a storage unit. The storage unit is configured to be coupled to the processing unit, and stores necessary program instructions and data for the serving gateway. For example, the processing unit may be a processor, the communications unit may be a communications interface, and the storage unit may be a memory.

According to still another aspect, an embodiment of the present invention provides a packet gateway. The packet gateway may be referred to as a second packet gateway, and the second packet gateway has a function of implementing behavior of the second packet gateway in the foregoing method design. The function may be implemented by using hardware, or may be implemented by hardware by executing corresponding software. The hardware or the software includes one or more modules corresponding to the function.

In a possible design, a structure of the second packet gateway includes a processing unit and a communications unit. The processing unit is configured to support the second packet gateway in performing a corresponding function in the foregoing method. The communications unit is configured to support communication between the second packet gateway and another device. The second packet gateway may further include a storage unit. The storage unit is configured to be coupled to the processing unit, and stores necessary program instructions and data for the second packet gateway. For example, the processing unit may be a processor, the communications unit may be a communications interface, and the storage unit may be a memory.

According to still another aspect, an embodiment of the present invention provides a mobility management network element. The mobility management network element has a function of implementing behavior of the mobility management network element in the foregoing method design. The function may be implemented by using hardware, or may be implemented by hardware by executing corresponding software. The hardware or the software includes one or more modules corresponding to the function.

In a possible design, a structure of the mobility management network element includes a processing unit and a communications unit. The processing unit is configured to support the mobility management network element in performing a corresponding function in the foregoing method. The communications unit is configured to support communication between the mobility management network element and another device. The mobility management network element may further include a storage unit. The storage unit is configured to be coupled to the processing unit, and stores necessary program instructions and data for the mobility management network element. For example, the processing unit may be a processor, the communications unit may be a communications interface, and the storage unit may be a memory.

According to still another aspect, an embodiment of the present invention provides a communications system. The system includes the serving gateway and the second packet gateway in the foregoing aspects; or the system includes the serving gateway, the second packet gateway, and the mobility management network element in the foregoing aspects.

According to yet another aspect, an embodiment of the present invention provides a computer storage medium, configured to store a computer software instruction to be used by the serving gateway, and the computer storage medium includes a program designed to perform the foregoing aspect.

According to yet another aspect, an embodiment of the present invention provides a computer storage medium, configured to store a computer software instruction to be used by the second packet gateway, and the computer storage medium includes a program designed to perform the foregoing aspect.

According to yet another aspect, an embodiment of the present invention provides a computer storage medium, configured to store a computer software instruction to be used by the mobility management network element, and the computer storage medium includes a program designed to perform the foregoing aspect.

Different from the prior art, in the solutions provided in the embodiments of the present invention, when the first bearer corresponding to the UE exists between the serving gateway and the first packet gateway, after receiving the IP packet of the UE, the serving gateway may determine, based on the IP address of the target server that is carried in the IP packet, the second packet gateway corresponding to the target server, determine the second bearer that is between the serving gateway and the second packet gateway and that corresponds to the UE, and transmit the access request of the UE by using the second bearer. The access request is used to request to access the resource stored on the target server. Therefore, the solutions provided in the embodiments of the present invention can avoid route recurvation of an access path, to improve resource access efficiency of the UE.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show only some embodiments of the present invention, and a person of ordinary skill in the art may still derive other drawings from these accompanying drawings without creative efforts.
FIG. 1 is a schematic diagram of a possible application scenario according to an embodiment of the present invention;
FIG. 2 is a schematic diagram of a possible system architecture to which an embodiment of the present invention is applied;
FIG. 3 is a schematic flowchart of a resource access method according to an embodiment of the present invention;
FIG. 4 is a schematic communication diagram of another resource access method according to an embodiment of the present invention;
FIG. 5 is a schematic communication diagram of still another resource access method according to an embodiment of the present invention;
FIG. 6 is a schematic communication diagram of yet another resource access method according to an embodiment of the present invention;
FIG. 7 is a schematic communication diagram of a dedicated bearer setup method according to an embodiment of the present invention;
FIG. 8 is a schematic communication diagram of a dedicated bearer modification method according to an embodiment of the present invention;
FIG. 9 is a schematic communication diagram of a dedicated bearer deletion method according to an embodiment of the present invention;
FIG. 10A is a schematic structural diagram of a serving gateway according to an embodiment of the present invention;
FIG. 10B is a schematic structural diagram of another serving gateway according to an embodiment of the present invention;
FIG. 11A is a schematic structural diagram of a packet gateway according to an embodiment of the present invention;
FIG. 11B is a schematic structural diagram of another packet gateway according to an embodiment of the present invention;
FIG. 12A is a schematic structural diagram of a mobility management network element according to an embodiment of the present invention; and
FIG. 12B is a schematic structural diagram of another mobility management network element according to an embodiment of the present invention.

### DESCRIPTION OF EMBODIMENTS

To make the objectives, technical solutions, and advantages of the embodiments of the present invention clearer, the following describes the technical solutions in the embodiments of the present invention with reference to the accompanying drawings in the embodiments of the present invention.

Network architectures and service scenarios described in the embodiments of the present invention are intended to describe the technical solutions in the embodiments of the present invention more clearly, and do not limit the technical solutions provided in the embodiments of the present invention. A person of ordinary skill in the art may know that as the network architectures evolve and a new business scenario emerges, the technical solutions provided in the embodiments of the present invention are also applicable to a similar technical problem.

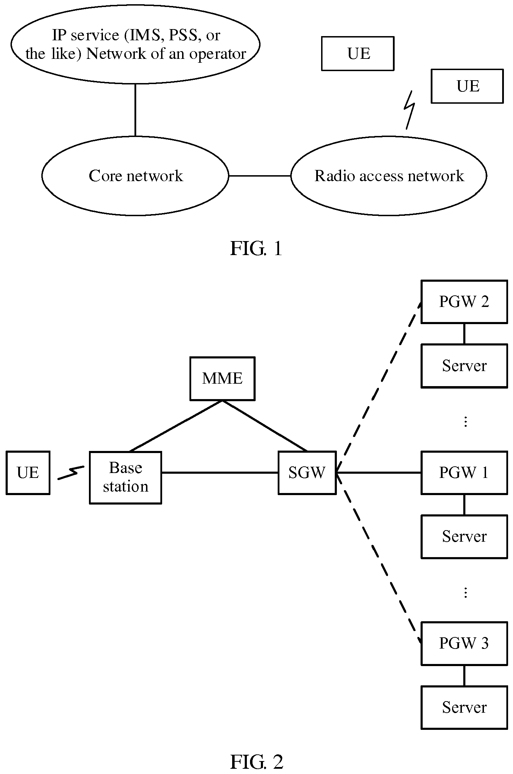

As shown in FIG. 1, UE accesses an Internet Protocol (Internet Protocol, IP) service network such as an IP multimedia system (IP Multimedia System, IMS) network or a packet switched streaming service (Packet Switched Streaming Service, PSS) network of an operator by using a radio access network (Radio Access Network, RAN) and a core network (Core Network, CN). The technical solutions described in the present invention may be applied to a Long Term Evolution (Long Term Evolution, LTE) system, or other wireless communications systems using various wireless access technologies, for example, systems using access technologies such as code division multiple access (Code Division Multiple Access, CDMA), frequency division multiple access (Frequency Division Multiple Access, FDMA), time division multiple access (Time Division Multiple Access, TDMA), orthogonal frequency division multiple access (Orthogonal Frequency Division Multiple Access, OFDMA), and single carrier frequency division multiple access (Single Carrier Frequency Division Multiple Access, SC-FDMA). In addition, the technical solutions may also be applied to a subsequent evolved system of the LTE system, for example, a fifth generation (5th Generation, 5G) system. For clarity, herein, only the LTE system is used as an example for description. In the LTE system, an evolved universal terrestrial radio access network (Evolved Universal Terrestrial Radio Access Network, E-UTRAN) is used as a radio access network, and an evolved packet core (Evolved Packet Core, EPC) is used as a core network. The UE accesses the IMS network by using the E-UTRAN and the EPC.

In the embodiments of the present invention, the nouns "network" and "system" are often interchangeably used, but meanings of the nouns can be understood by a person skilled in the art. The user equipment UE in the embodiments of the present invention may include various handheld devices with a wireless communication function, an in-vehicle device, a wearable device, a computing device or another processing device connected to a wireless modem, various forms of user equipments (User Equipment, UE), a mobile station (Mobile Station, MS), a terminal (terminal), a terminal device (terminal device), and the like. For ease of description, in the embodiments of the present invention, the devices mentioned above are collectively referred to as user equipment or UE. A base station (Base Station, BS) in the embodiments of the present invention is an apparatus deployed in the radio access network to provide a wireless communication function for the UE. The base station may include various forms such as a macro base station, a micro base station, a relay station, and an access point. In systems using different wireless access technologies, devices with a base station function may have different names. For example, in an LTE network, a device with a base station function is referred to as an evolved NodeB (evolved NodeB, eNB or eNodeB); in a third generation (3rd Generation, 3G) network, a device with a base station function is referred to as a NodeB (NodeB). For ease of description, in the embodiments of the present invention, the apparatuses providing the wireless communication function for the UE are collectively referred to as a base station or a BS.

FIG. 2 is a schematic diagram of a possible system architecture according to an embodiment of the present invention. As shown in FIG. 2, UE is connected to an SGW by using a base station, and connected to a PGW 1 by using the SGW. A mobility management entity (Mobility Management Entity, MME) is used as a control plane network element, and is separately connected to the base station and the SGW by using ports. The MME is configured to transmit control plane signaling to the base station and the SGW. In addition, the system architecture shown in FIG. 2 further includes other PGWs such as a PGW 2 and a PGW 3. Local servers are usually deployed at the PGW 1, the PGW 2, the PGW 3, and the like. For example, the local server may be a cache server (cache server) or a service server deployed on a same node as a corresponding PGW. It should be noted that, FIG. 2 is used only as an example, and when the solutions in the embodiments of the present invention are applied to a 2G or 3G network architecture, a function of the SGW may be completed by an SGSN, and a function of the PGW may be completed by a GGSN.

In FIG. 2, a bearer corresponding to the UE is already set up between the SGW and the PGW 1. When accessing a network resource, the UE may first search a local server corresponding to the PGW 1 to determine whether the local server corresponding to the PGW 1 stores the resource. When the local server stores the resource, the UE may obtain the resource from the nearby local server, thereby avoiding network congestion, and increasing a response speed to resource access of a user. When the local server corresponding to the PGW 1 does not store the resource, the PGW 1 may query whether another local server stores the resource. When the another local server (for example, a local server corresponding to the PGW 2) stores the resource, the PGW 1 may set up a bearer to the PGW 2 corresponding to the another local server, to obtain the resource. However, when the PGW 1 sets up the bearer to the PGW 2 to obtain the resource, a resource obtaining path is roundabout, thereby affecting an access speed of the UE, and wasting a network resource.

Based on this, an embodiment of the present invention provides a resource access method whose main idea is that in a case of a single PDN link, in addition to setting up a bearer to a default packet gateway, a serving gateway may further set up a bearer corresponding to same UE to at least one other packet gateway, to help the UE obtain a resource. For example, the method may include: receiving, by the serving gateway, an IP packet of the UE, where the IP packet carries an IP address of a target server, the target server stores a resource to be accessed by the UE, and a first bearer corresponding to the UE exists between the serving gateway and a first packet gateway; determining, by the serving gateway based on the IP address, a second packet gateway corresponding to the target server; determining a second bearer that is between the serving gateway and the second packet gateway and that corresponds to the UE, for example, the second bearer may be set up or the second bearer may be selected from existing bearers; and sending an access request of the UE by using the second bearer, where the access request is used to request to access the resource stored on the target server. In the solution provided in this embodiment of the present invention, after receiving the access request of the UE, the serving gateway may send the access request of the UE to the second packet gateway by using the second bearer, to access the resource stored on the target server corresponding to the second packet gateway, thereby avoiding route recurvation of an access path, helping increase an access speed of the UE and improve access efficiency of the UE, and saving a network resource.

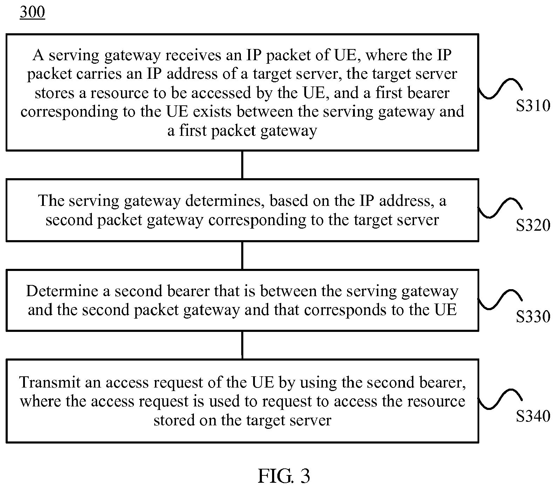

The solution provided in this embodiment of the present invention is described below with reference to FIG. 3. FIG. 3 shows a resource access method 300 according to an embodiment of the present invention. As shown in FIG. 3, the method 300 includes the following steps.

In S310, a serving gateway receives an IP packet of UE, where the IP packet carries an IP address of a target server, the target server stores a resource to be accessed by the UE, and a first bearer corresponding to the UE exists between the serving gateway and a first packet gateway. For example, the IP packet may be a Transmission Control Protocol (Transmission Control Protocol, TCP) setup request packet, or the IP packet may be an IP packet in another format.

In an example, before sending the IP packet to the serving gateway, the UE may further obtain the IP address of the target server. For example, the UE may receive the IP address of the target server that is sent by the first packet gateway. The first packet gateway may send a redirection message (for example, an HTTP redirection message) to the UE, and the redirection message includes the IP address of the target server.

In an example, the first bearer between the serving gateway and the first packet gateway may be a default bearer that is set up between the UE and the first packet gateway when the UE sets up a PDN link to a core network. The default bearer is set up as the PDN connection is set up, and the default bearer always exists when the PDN link is maintained.

In S320, the serving gateway determines, based on the IP address, a second packet gateway corresponding to the target server.

In an example, the serving gateway determines, based on the IP address, the target server and the second packet gateway corresponding to the target server. The second packet gateway may be a packet gateway deployed on a same node as the target server; or the second packet gateway may be a packet gateway located in a same local area network (Local Area Network, LAN) as the target server.

In S330, a second bearer that is between the serving gateway and the second packet gateway and that corresponds to the UE is determined.

In an example, the serving gateway may determine the second bearer that is between the serving gateway and the second packet gateway and that corresponds to the UE. For example, the serving gateway may determine the second bearer from at least two existing bearers, and the at least two existing bearers are bearers that are between the serving gateway and at least two packet gateways and that correspond to the UE.

In another example, the second bearer may be determined in the following manner: The serving gateway sends a bearer setup request to the second packet gateway, where the bearer setup request is used to set up the second bearer; and the second packet gateway sets up the second bearer after receiving the bearer setup request. The bearer setup request may include parameter information of the second bearer, and the second packet gateway may set up the second bearer based on the parameter information. Further, the second packet gateway may further send a bearer setup response message to the serving gateway. For example, the bearer setup request may be an S5 connection setup request message, and the bearer setup response message may be an S5 connection setup response message.

In an example, before the serving gateway sends the bearer setup request to the second packet gateway, the serving gateway may further receive an instruction message sent by a mobility management network element or the first packet gateway. The instruction message carries an IP address of the second packet gateway, and the instruction message is used to instruct to set up the second bearer between the serving gateway and the second packet gateway. The mobility management network element may be an MME. The instruction message may be an S5 connection setup request message. In this example, before sending the instruction message, the mobility management network element or the first packet gateway may further receive the IP address of the target server that is sent by a cache controller.

In S340, an access request of the UE is transmitted by using the second bearer, where the access request is used to request to access the resource stored on the target server. For example, the access request of the UE may be an HTTP request.

In an example, the access request of the UE may be transmitted by using the second bearer in the following manner: The serving gateway sends the access request to the second packet gateway by using the second bearer; and after receiving the access request of the UE that is sent by the serving gateway by using the second bearer, the second packet gateway may further return a response message to the serving gateway, to complete a response process. After the response process is completed, the resource stored on the target server may be transmitted between the serving gateway and the second packet gateway by using the second bearer.

In an example, the access request may include the IP address of the target server, and the serving gateway may determine or choose, based on the IP address in the access request, to transmit the access request of the UE by using the second bearer.

It should be noted that, the first bearer may be one of bearers that are set up by the UE by using a base station, the serving gateway, and the first packet gateway and that correspond to the UE. For example, the first bearer may be an S5 bearer between the serving gateway and the first packet gateway. It may be understood that, when the UE sends a request message to the first packet gateway through the serving gateway by using the first bearer, and sends a request message to the second packet gateway through the serving gateway by using the second bearer, a bearer between the UE and the serving gateway may be reused, thereby improving bearer use efficiency.

It may be understood that, the first bearer and the second bearer correspond to a same PDN link. Alternatively, it may be understood that, in the solution provided in this embodiment of the present invention, the serving gateway can be connected to a plurality of packet gateway anchors based on a same PDN link. For example, in an LTE system, an SGW can be connected to a plurality of PGW anchors.

In this embodiment of the present invention, when the first bearer corresponding to the UE exists between the serving gateway and the first packet gateway, the second bearer is determined between the serving gateway and the second packet gateway, so that the UE can access the resource in the target server corresponding to the second packet gateway by using the second bearer, thereby reducing route recurvation of an access path, and improving resource access efficiency.

In an example, the serving gateway may further receive a dedicated bearer setup request sent by the second packet gateway, where the dedicated bearer setup request is used to request to set up a first dedicated bearer that is between the serving gateway and the second packet gateway and that corresponds to the UE; the serving gateway sets up the first dedicated bearer according to the dedicated bearer setup request; and the serving gateway determines a second dedicated bearer between the serving gateway and the UE.

In this embodiment of the present invention, the serving gateway sets up the first dedicated bearer to the second packet gateway, and determines the second dedicated bearer between the serving gateway and the UE, to transmit the resource by using the first dedicated bearer and the second dedicated bearer, and meet transmission requirements of services with different QoS requirements.

It should be understood that, in a case of one PDN link, there may be one default bearer and a plurality of dedicated bearers. The default bearer is a data and signaling bearer that meets default QoS. The default bearer is set up during setup of the PDN link. A dedicated bearer is a bearer that is set up based on the PDN link to provide a particular QoS transmission requirement. In other words, the dedicated bearer is set up based on setup of the default bearer. Usually, the QoS requirement on the dedicated bearer is higher than the QoS requirement on the default bearer.

The first dedicated bearer may be a dedicated bearer that is set up between the serving gateway and the packet gateway after a default bearer is set up between the serving gateway and the packet gateway, to transmit data with a higher QoS requirement. For example, when a resource, such as video data, with a relatively high QoS requirement needs to be transmitted between the serving gateway and the packet gateway, a dedicated bearer used to transmit the video data may be set up between the serving gateway and the packet gateway.

It should be understood that, the second dedicated bearer between the serving gateway and the UE is a dedicated bearer between the serving gateway and the UE, and the resource is transmitted between the UE and a PGW 2 by using the first dedicated bearer and the second dedicated bearer. The second dedicated bearer may include a dedicated bearer between the serving gateway and the base station and a radio dedicated bearer between the base station and the UE.

In an example, the determining, by the serving gateway, a second dedicated bearer between the serving gateway and the UE includes: determining, by the serving gateway, that a dedicated bearer exists between the serving gateway and the UE, and determining the dedicated bearer as the second dedicated bearer; or determining, by the serving gateway, that no dedicated bearer exists between the serving gateway and the UE, and setting up the second dedicated bearer.

In this embodiment of the present invention, when determining that a dedicated bearer exists between the serving gateway and the UE, the serving gateway determines the dedicated bearer as the second dedicated bearer, and does not need to set up the second dedicated bearer, and the second dedicated bearer can be reused, to save a network resource.

In the prior art, an SGW can set up a first dedicated bearer corresponding to UE to only one packet gateway. For example, in the prior art, after the SGW sets up a first dedicated bearer to a PGW 1, the SGW needs to set up a second dedicated bearer to the UE, to set up a dedicated bearer between the UE and the PGW 1. However, in this embodiment of the present invention, when the SGW receives a request for a first dedicated bearer to a PGW 2, the SGW may have set up a first dedicated bearer to another PGW. It indicates that a dedicated bearer has been set up between the SGW and the UE. In this case, the SGW does not need to set up a second dedicated bearer, but only needs to determine the dedicated bearer between the SGW and the UE as the second dedicated bearer, and transmits, by using the first dedicated bearer and the second dedicated bearer, a resource to be accessed by the UE. When no dedicated bearer exists between the serving gateway and the UE, the serving gateway sets up the second dedicated bearer. This can save a network resource, and improve resource access efficiency of the UE.

In an example, in this embodiment of the present invention, when the serving gateway receives a dedicated bearer setup request sent by the first packet gateway, the second packet gateway in the foregoing dedicated bearer setup method may be replaced with the first packet gateway. Details are not described herein again.

In an example, the method provided in this embodiment of the present invention may further include: receiving, by the serving gateway, a dedicated bearer modify request sent by the second packet gateway, where the dedicated bearer modify request is used to request to modify the first dedicated bearer; modifying, by the serving gateway, the first dedicated bearer according to the dedicated bearer modify request; and determining, by the serving gateway, that a dedicated bearer corresponding to the UE exists between the serving gateway and another packet gateway other than the second packet gateway, and modifying the dedicated bearer between the serving gateway and the another packet gateway other than the second packet gateway.

In this embodiment of the present invention, when modifying the first dedicated bearer between the serving gateway and the second packet gateway, the serving gateway also modifies the dedicated bearer between the serving gateway and the another packet gateway other than the second packet gateway, to ensure communication of a dedicated bearer between the UE and the another packet gateway, and improve resource access efficiency.

It should be understood that, in this embodiment of the present invention, after receiving the dedicated bearer modify request of the second packet gateway, the serving gateway needs to modify the first dedicated bearer between the serving gateway and the second packet gateway, and modify the second dedicated bearer between the serving gateway and the UE. In this case, the serving gateway further needs to determine whether another packet gateway shares the second dedicated bearer with the second packet gateway, or in other words, the serving gateway further needs to determine whether a dedicated bearer corresponding to the UE exists between the serving gateway and another gateway other than the second packet gateway. When the dedicated bearer exists, the serving gateway further needs to modify the dedicated bearer between the serving gateway and the another gateway, to ensure normal communication of a dedicated bearer between the UE and the another packet gateway.

In this embodiment of the present invention, when the serving gateway receives a dedicated bearer modify request sent by the first packet gateway, the second packet gateway in the foregoing dedicated bearer modification method may be replaced with the first packet gateway. Details are not described herein again.

In an example, the method provided in this embodiment of the present invention further includes: receiving, by the serving gateway, a dedicated bearer delete request sent by the second packet gateway, where the dedicated bearer delete request is used to request to delete the first dedicated bearer; deleting, by the serving gateway, the first dedicated bearer according to the dedicated bearer request; and determining, by the serving gateway, that no dedicated bearer corresponding to the UE exists between the serving gateway and another packet gateway other than the second packet gateway, and deleting the second dedicated bearer, to improve resource access efficiency.

In this embodiment of the present invention, when deleting the first dedicated bearer between the serving gateway and the second packet gateway, the serving gateway also determines whether a dedicated bearer corresponding to the UE exists between the serving gateway and another packet gateway. When the dedicated bearer exists, the serving gateway does not delete the second dedicated bearer between the serving gateway and the UE, to ensure normal communication of a dedicated bearer between the UE and the another packet gateway.

It should be understood that, in this embodiment of the present invention, after receiving the dedicated bearer delete request of the second packet gateway, the serving gateway needs to delete the first dedicated bearer between the serving gateway and the second packet gateway, and determine whether to delete the second dedicated bearer between the serving gateway and the UE. In this case, the serving gateway further needs to determine whether another packet gateway shares the second dedicated bearer with the second packet gateway, or in other words, the serving gateway further needs to determine whether a dedicated bearer corresponding to the UE exists between the serving gateway and another gateway other than the second packet gateway. When the dedicated bearer exists, the serving gateway does not delete the second dedicated bearer. When no dedicated bearer corresponding to the UE exists between the serving gateway and the another packet gateway, the serving gateway deletes the second dedicated bearer, to ensure normal communication of a dedicated bearer between the UE and the another packet gateway.

Optionally, in this embodiment of the present invention, when the serving gateway receives a dedicated bearer delete request sent by the first packet gateway, the second packet gateway in the foregoing dedicated bearer deletion method may be replaced with the first packet gateway. Details are not described herein again.

In the prior art, when UE has a single PDN link, a serving gateway can set up a connection corresponding to the UE to only one packet gateway, and when a resource to be accessed by the UE is located in a local server corresponding to another local packet gateway, the serving gateway is not supported to set up a bearer corresponding to the UE to the another packet gateway while maintaining the same PDN link, thereby affecting resource obtaining efficiency of the UE. However, in this embodiment of the present invention, when the first bearer corresponding to the UE exists between the serving gateway and the first packet gateway, a second bearer between the serving gateway and at least one other packet gateway (for example, the second packet gateway) may be further determined, so that the access request of the UE can be transmitted by using the second bearer, to obtain the resource stored on the target server corresponding to the second packet gateway. Therefore, the solution in this embodiment of the present invention can avoid route recurvation of an access path, and help improve resource access efficiency.

The solution in this embodiment of the present invention is further described below with reference to more accompanying drawings.

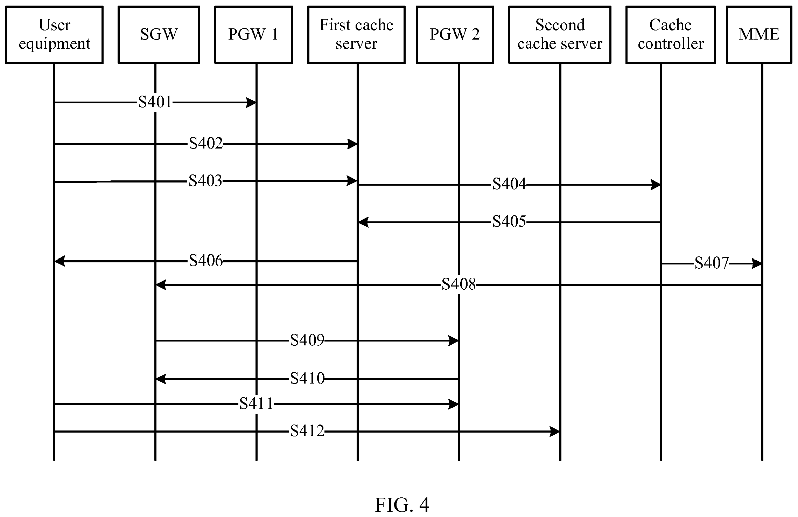

FIG. 4 shows another resource access method according to an embodiment of the present invention. As shown in FIG. 4, the serving gateway may be an SGW, the first packet gateway may be a PGW 1, a first cache server may be a cache server corresponding to the PGW 1, and a second cache server may be the target server; in other words, the second cache server stores a resource to be accessed by UE. A PGW 2 may be the second packet gateway, or in other words, the PGW 2 is a packet gateway corresponding to the second cache server. A cache controller may be configured to schedule and control cache servers in a distributed cache system. The second bearer may be an S5 bearer.

As shown in FIG. 4, the resource access method may be as follows:

In S401, the UE sets up a PDN link to the PGW 1. An S5 bearer is set up between the SGW and the PGW 1.

In S402, the UE sets up a first TCP connection to the first cache server by using the PGW 1.

In S403, the UE sends a first HTTP request packet to the first cache server by using the PGW 1. The first HTTP request packet is used to request to access the resource.

In S404, the first cache server queries for a local cache, and sends a query message to the cache controller if no local cache is hit.

In S405, the cache controller performs cache hit query in a distributed cache range after receiving the query message, and feeds back an IP address of the second cache server to the first cache server after determining that the resource is stored on the second cache server.

In S406, the first cache server notifies the UE of the IP address of the second cache server by using an HTTP redirection message, so that the UE initiates a second HTTP request packet to the second cache server based on the IP address of the second cache server; and the first cache server sends a notification message to the cache controller, where the notification message is used to notify that the first cache server is to send the HTTP redirection message.

In S407, after receiving the notification message sent by the first cache server, the cache controller notifies an MME of the IP address of the second cache server; or the cache controller determines an IP address of the PGW 2 based on the IP address of the second cache, and notifies an MME of the IP address of the second packet gateway.

In S408, the MME obtains the IP address of the PGW 2, or the MME determines the IP address of the PGW 2 based on the IP address of the second cache server, and sends an S5 connection setup instruction message to the SGW. The S5 connection setup instruction message includes the IP address of the PGW 2.

In this part, the serving gateway determines the IP address of the second packet gateway by using the instruction message sent by the MME, and the serving gateway sets up the second bearer in advance as instructed by the MME, thereby reducing time used by the UE to access the resource.

In S409, after receiving the S5 connection setup instruction message of the MME, the SGW determines the IP address of the PGW 2, and sends an S5 bearer connection setup request message to the PGW 2. The S5 bearer setup request message includes parameter information of an S5 bearer.

In S410, after receiving the S5 bearer connection setup request message, the PGW 2 sets up the S5 bearer, and returns an S5 connection setup response message to the SGW.

In S411, the SGW receives a second TCP setup request packet sent by the UE, where the second TCP setup request packet includes the IP address of the second cache server; and the SGW determines the IP address of the PGW 2 based on the IP address of the second cache server, performs searching to determine whether a corresponding S5 bearer exists locally, and if the corresponding S5 bearer exists, sets up a TCP connection to the second cache server by using the S5 bearer, or if no corresponding S5 bearer exists, sets up the corresponding S5 bearer and then sets up a TCP connection to the second cache server.

In S412, the SGW receives the second HTTP request packet sent by the UE. The second HTTP request packet is used to request to access the resource in the second cache server. The SGW transmits the resource to the UE by using the S5 bearer between the SGW and the PGW 2.

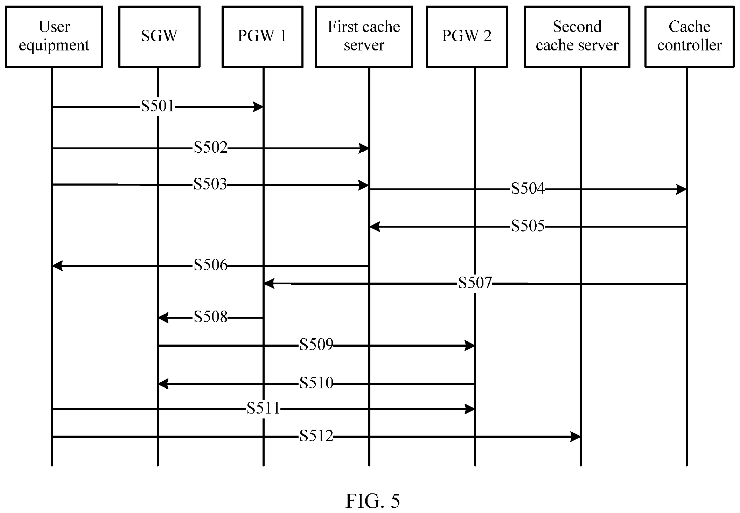

FIG. 5 shows still another resource access method according to an embodiment of the present invention. For content that is in the method shown in FIG. 5 and that is the same as or similar to content in the method shown in FIG. 4, refer to the detailed descriptions related to FIG. 4. Details are not described herein again.

As shown in FIG. 5, the resource access method may be as follows:

S501 to S506 in FIG. 5 are the same as or similar to S401 to S406 in FIG. 4. Refer to the detailed descriptions in corresponding parts in FIG. 4. Details are not described herein again.

In S507, after receiving the notification message sent by the first cache server, the cache controller notifies the PGW 1 of the IP address of the second cache server; or the cache controller determines an IP address of the PGW 2 based on the IP address of the second cache, and notifies the PGW 1 of the IP address of the second packet gateway.

In S508, the PGW 1 determines the IP address of the PGW 2 based on the IP address of the second cache server, and sends an S5 connection setup instruction message to the SGW. The S5 connection setup instruction message includes the IP address of the PGW 2.

In this part, the serving gateway determines the IP address of the second packet gateway by using the instruction message sent by the first packet gateway, and sets up the second bearer in advance as instructed by the first packet gateway, thereby reducing time used by the UE to access the resource.

In S509, after receiving the S5 connection setup instruction message of the PGW 1, the SGW determines the IP address of the PGW 2, and sends an S5 bearer connection setup request message to the PGW 2.

In S510, after receiving the S5 bearer connection setup request message, the PGW 2 sets up an S5 bearer, and returns an S5 connection setup response message to the SGW.

In S511, the SGW receives a second TCP setup request packet sent by the UE, where the second TCP setup request packet includes the IP address of the second cache server; and the SGW performs searching, based on the IP address of the second cache server, to determine whether a corresponding S5 bearer exists locally, and if the corresponding S5 bearer exists, sets up a TCP connection to the second cache server by using the S5 bearer, or if no corresponding S5 bearer exists, sets up the corresponding S5 bearer and then sets up a TCP connection to the second cache server.

In S512, the SGW receives the second HTTP request packet sent by the UE, where the second HTTP request packet is used to request to access the resource in the second cache server; and the SGW transmits the resource to the UE by using the S5 bearer between the SGW and the PGW 2.

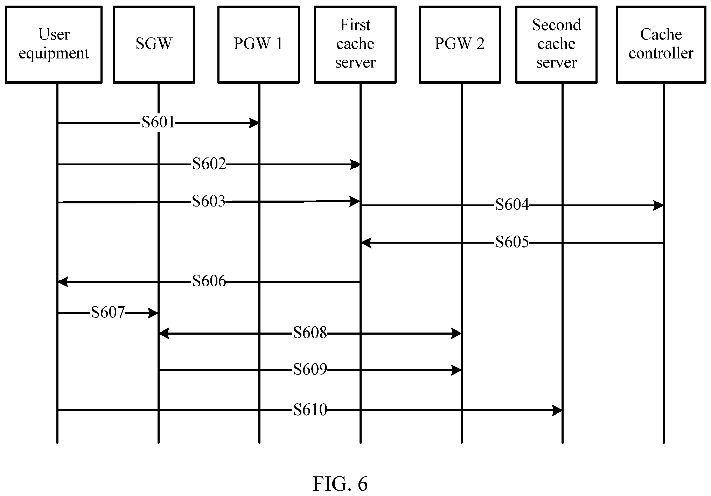

To describe more clearly a manner for determining the second bearer between the serving gateway and the second packet gateway in the foregoing method, FIG. 6 shows yet another resource access method according to an embodiment of the present invention. For content that is in the method shown in FIG. 6 and that is the same as or similar to content in the method shown in FIG. 4 or FIG. 5, refer to the detailed descriptions related to FIG. 4 or FIG. 5. Details are not described herein again.

As shown in FIG. 6, the resource access method may be as follows:

S601 to S606 in FIG. 6 are the same as or similar to S401 to S406 in FIG. 4. Refer to the detailed descriptions in corresponding parts in FIG. 4. Details are not described herein again.

In S607, the SGW receives a second TCP setup request packet sent by the UE, where the second TCP setup request packet includes the IP address of the second cache server; and the SGW determines an IP address of the PGW 2 based on the IP address of the second cache server, performs searching to whether an S5 bearer corresponding to the PGW 2 exists locally, and if the corresponding S5 bearer exists, sets up a TCP connection to the second cache server by using the S5 bearer, or if no corresponding S5 bearer exists, sends an S5 bearer connection setup request message to the PGW 2.

In this embodiment of the present invention, the serving gateway determines the IP address of the second packet gateway by parsing the IP packet sent by the UE, and directly sets up the second bearer without control plane signaling, thereby saving a network resource.

In S608, after receiving the S5 bearer connection setup request message, the PGW 2 sets up an S5 bearer, and returns an S5 bearer connection setup response message to the SGW.

In S609, the SGW sets up a TCP connection by using the S5 bearer between the SGW and the PGW 2.

In S610, the SGW receives the second HTTP request packet sent by the UE, where the second HTTP request packet is used to request to access the resource in the second cache server; and the SGW transmits the resource to the UE by using the S5 bearer between the SGW and the PGW 2.

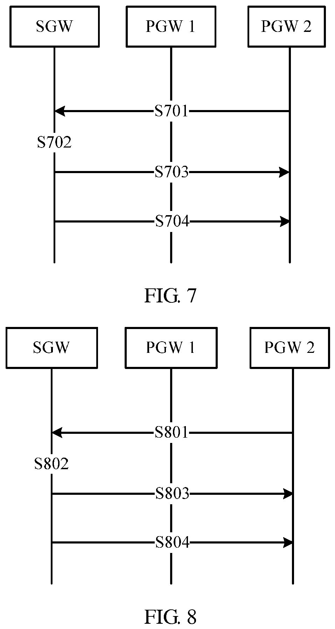

The solution provided in this embodiment of the present invention is described above in detail with reference to FIG. 1 to FIG. 6. Based on this, based on different quality of service level requirements of services, the UE may further set up a dedicated bearer to the second packet gateway, and access a resource by using the dedicated bearer. Dedicated bearer setup, modification, and deletion methods are described below with reference to FIG. 7 to FIG. 9. In the methods shown in FIG. 7 to FIG. 9, a default bearer (for example, an S5 bearer) already exists between the SGW and the PGW 1, and a default bearer (for example, an S5 bearer) already exists between the SGW and the PGW 2.

FIG. 7 is a schematic communication diagram of a dedicated bearer setup method according to an embodiment of the present invention. As shown in FIG. 7, the dedicated bearer setup method includes the following parts:

In S701, an SGW receives a dedicated bearer setup request sent by a PGW 2. The dedicated bearer setup request is used to request to set up a first dedicated bearer between the SGW and the PGW 2.

In S702, the SGW determines whether a dedicated bearer exists between the SGW and UE.

In S703, when the dedicated bearer exists between the SGW and the UE, the SGW determines the dedicated bearer as a second dedicated bearer between the SGW and the UE, and sets up the first dedicated bearer between the SGW and the PGW 2. After setting up the first dedicated bearer, the SGW sends a dedicated bearer setup response message to the PGW 2. The dedicated bearer setup response message includes parameter information (for example, a bearer ID identifier) of the first dedicated bearer and the second dedicated bearer.

In S704, when no dedicated bearer exists between the SGW and the UE, the SGW sets up the first dedicated bearer between the SGW and the PGW 2, and sets up a second dedicated bearer between the SGW and the UE. After setting up the first dedicated bearer, the SGW sends a dedicated bearer setup response message to the PGW 2.

In this embodiment of the present invention, when a second packet gateway requests the serving gateway to set up a dedicated bearer, the serving gateway determines whether a dedicated bearer exists between the serving gateway and the UE, and when the dedicated bearer exists, determines the dedicated bearer as the second dedicated bearer between the serving gateway and the UE, sets up only the first dedicated bearer between the serving gateway and the second packet gateway, and transmits, by using the first dedicated bearer and a second resource, a resource to be accessed by the UE, thereby saving a network resource, and improving resource access efficiency of the UE.

FIG. 8 is a schematic communication diagram of a dedicated bearer modification method. As shown in FIG. 8, the dedicated bearer modification method includes the following parts:

In S801, an SGW receives a dedicated bearer modify request sent by a PGW 2. The dedicated bearer modify request is used to request to modify a dedicated bearer between the SGW and the PGW 2.

In S802, the SGW determines whether a dedicated bearer corresponding to UE exists between the SGW and another PGW other than the PGW 2.

In S803, when the dedicated bearer exists between the SGW and the another PGW, the SGW modifies the dedicated bearer between the SGW and the PGW 2, and modifies the dedicated bearer between the SGW and the another packet gateway and a dedicated bearer between the SGW and the UE.

In S804, when no dedicated bearer exists between the SGW and the another PGW, the SGW modifies the dedicated bearer between the SGW and the PGW 2 and a dedicated bearer between the SGW and the UE.

In this embodiment of the present invention, when a second packet gateway requests the serving gateway to modify a dedicated bearer, the serving gateway determines whether a dedicated bearer exists between the serving gateway and the another packet gateway, and when the dedicated bearer exists between the serving gateway and the another packet gateway, not only modifies the dedicated bearer between the second packet gateway and the serving gateway, but also modifies the dedicated bearer between the another packet gateway and the serving gateway, to ensure communication between the serving gateway and the another packet gateway, thereby improving resource access efficiency.

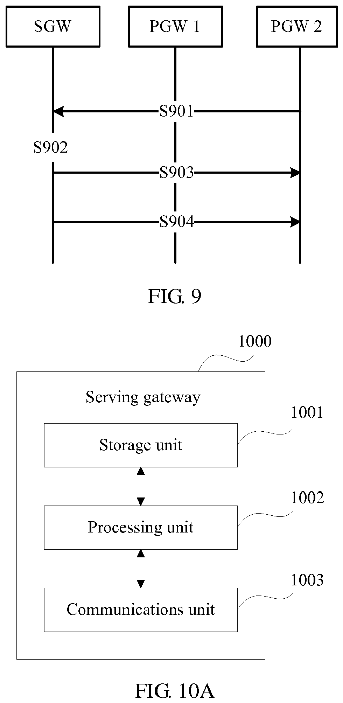

FIG. 9 is a schematic communication diagram of a dedicated bearer deletion method. As shown in FIG. 9, the dedicated bearer deletion method includes the following parts:

In S901, an SGW receives a dedicated bearer delete request sent by a PGW 2.

In S902, the SGW determines whether a first dedicated bearer corresponding to UE exists between the SGW and another PGW other than the PGW 2.

In S903, when a dedicated bearer exists between the SGW and the another PGW, the SGW deletes a dedicated bearer between the SGW and the PGW 2, but does not delete a second dedicated bearer between the SGW and the UE.

In S904, when no dedicated bearer exists between the SGW and the another PGW, the SGW deletes a dedicated bearer between the SGW and the PGW 2, and deletes a second dedicated bearer between the SGW and the UE.

In this embodiment of the present invention, when a second packet gateway requests the serving gateway to delete a dedicated bearer, the serving gateway determines whether the dedicated bearer corresponding to the UE exists between the serving gateway and the another packet gateway, and when the dedicated bearer exists between the serving gateway and the another packet gateway, deletes only the dedicated bearer between the second packet gateway and the serving gateway, and retains the second dedicated bearer between the serving gateway and the UE and the dedicated bearer between the serving gateway and the another packet gateway, thereby ensuring communication between the serving gateway and the another packet gateway, and improving resource access efficiency.

It should be noted that, when the solutions provided in the embodiments of the present invention are applied to different system architectures, the serving gateway may be an SGW or an SGSN, and the packet gateway may be a PGW or a GGSN. For example, when the solutions are applied to the system architecture shown in FIG. 1, the serving gateway is an SGW, and the packet gateway is a PGW.

The foregoing mainly describes the solutions in the embodiments of the present invention from a perspective of interaction between network elements. It may be understood that, to implement the foregoing functions, network elements such as the serving gateway, the second packet gateway, and the mobility management network element include corresponding hardware structures and/or software modules for performing the functions. A person of ordinary skill in the art should be easily aware that, the units and algorithm steps in the examples described with reference to the embodiments disclosed in this specification may be implemented by hardware or a combination of hardware and computer software. Whether a particular function is performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

In the embodiments of the present invention, the serving gateway, the packet gateway (for example, the second packet gateway), and the like may be divided into function units based on the foregoing method examples. For example, each function unit may be obtained through division based on each function, or two or more functions may be integrated into one processing unit. The integrated unit may be implemented in a form of hardware, or may be implemented in a form of a software function unit. It should be noted that, the unit division in the embodiments of the present invention is an example, and is only logical function division. There may be another division manner in actual implementation.

When an integrated unit is used, FIG. 10A is a possible schematic structural diagram of the serving gateway in the foregoing embodiments. A serving gateway 1000 includes a processing unit 1002 and a communications unit 1003. The processing unit 1002 is configured to control and manage an action of the serving gateway. For example, the processing unit 1002 is configured to support the serving gateway in performing processes 310 to 340 in FIG. 3, processes 401, 409, 411, and 412 in FIG. 4, processes 501, 509, 511, and 512 in FIG. 5, processes 601, 607, 608, 609, and 610 in FIG. 6, processes 702 to 704 in FIG. 7, processes 802 to 804 in FIG. 8, processes 902 to 904 in FIG. 9, and/or another process used for the technology described in this specification. The communications unit 1003 is configured to support the serving gateway in communicating with another network entity, for example, communicating with the base station, the MME, the PGW, and the like shown in FIG. 2. The serving gateway may further include a storage unit 1001, configured to store program code and data of the serving gateway.

The processing unit 1002 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing unit may implement or execute various example logical blocks, modules, and circuits that are described with reference to the content disclosed in the present invention. The processor may alternatively be a combination for implementing a computing function, for example, a combination of one or more microprocessors or a combination of a DSP and a microprocessor. The communications unit 1003 may be a communications interface, a transceiver, a transceiver circuit, or the like. The communications interface is a general name. In specific implementation, the communications interface may include a plurality of interfaces, for example, may include an interface between the serving gateway and a packet gateway, an interface between the serving gateway and a mobility management network element, and/or another interface. The storage unit 1001 may be a memory.

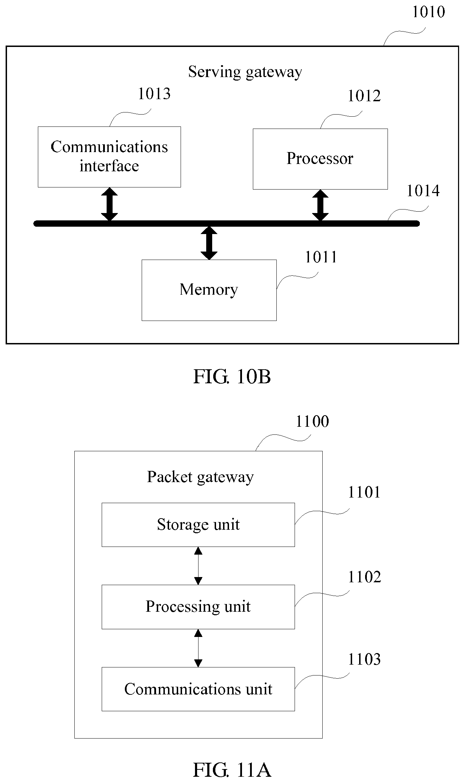

When the processing unit 1002 is a processor, the communications unit 1003 is a communications interface, and the storage unit 1001 is a memory, the serving gateway in this embodiment of the present invention may be a serving gateway shown in FIG. 10B.

Referring to FIG. 10B, the serving gateway 1010 includes a processor 1012, a communications interface 1013, and a memory 1011. Optionally, the serving gateway 1010 may further include a bus 1014. The communications interface 1013, the processor 1012, and the memory 1011 may be connected to each other by using the bus 1014. The bus 1014 may be a peripheral component interconnect (Peripheral Component Interconnect, PCI for short) bus, an extended industry standard architecture (Extended Industry Standard Architecture, EISA for short) bus, or the like. The bus 1014 may be classified into an address bus, a data bus, a control bus, or the like. For ease of indication, the bus is indicated by using only one bold line in FIG. 10B. However, it does not indicate that there is only one bus or only one type of bus.

When an integrated unit is used, FIG. 11A is a possible schematic structural diagram of the packet gateway in the foregoing embodiments. A packet gateway 1100 includes a processing unit 1102 and a communications unit 1103. The processing unit 1102 is configured to control and manage an action of the packet gateway. For example, the processing unit 1102 is configured to support the packet gateway in performing processes 330 and 340 in FIG. 3, processes 410 and 412 in FIG. 4, processes 510 and 512 in FIG. 5, processes 608 and 610 in FIG. 6, a process 701 in FIG. 7, a process 801 in FIG. 8, a process 901 in FIG. 9, and/or another process used for the technology described in this specification. The communications unit 1103 is configured to support the packet gateway in communicating with another network entity, for example, communicating with the base station, the MME, the PGW, and the like shown in FIG. 2. The packet gateway may further include a storage unit 1101, configured to store program code and data of the packet gateway.

The processing unit 1102 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing unit may implement or execute various example logical blocks, modules, and circuits that are described with reference to the content disclosed in the present invention. The processor may alternatively be a combination for implementing a computing function, for example, a combination of one or more microprocessors or a combination of a DSP and a microprocessor. The communications unit 1103 may be a communications interface, a transceiver, a transceiver circuit, or the like. The communications interface is a general name. In specific implementation, the communications interface may include a plurality of interfaces, for example, may include an interface between the packet gateway and a serving gateway, and/or another interface. The storage unit 1101 may be a memory.

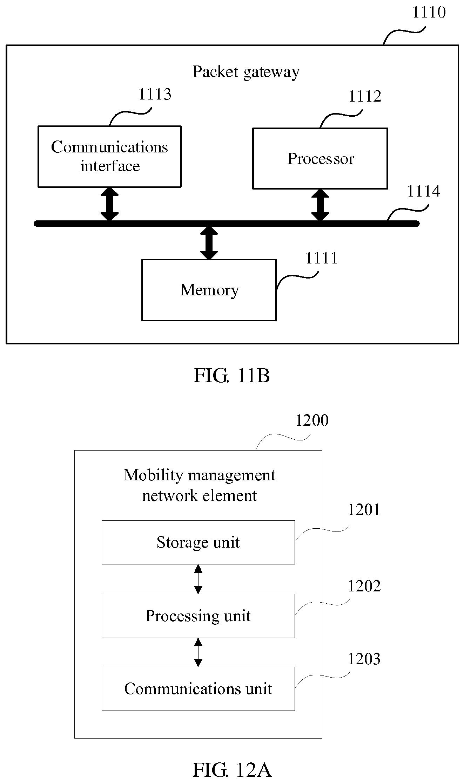

When the processing unit 1102 is a processor, the communications unit 1103 is a communications interface, and the storage unit 1101 is a memory, the packet gateway in this embodiment of the present invention may be a packet gateway shown in FIG. 11B.

Referring to FIG. 11B, the packet gateway 1110 includes a processor 1112, a communications interface 1113, and a memory 1111. Optionally, the packet gateway 1110 may further include a bus 1114. The communications interface 1113, the processor 1112, and the memory 1111 may be connected to each other by using the bus 1114. The bus 1114 may be a peripheral component interconnect (Peripheral Component Interconnect, PCI for short) bus, an extended industry standard architecture (Extended Industry Standard Architecture, EISA for short) bus, or the like. The bus 1114 may be classified into an address bus, a data bus, a control bus, or the like. For ease of indication, the bus is indicated by using only one bold line in FIG. 11B. However, it does not indicate that there is only one bus or only one type of bus.

When an integrated unit is used, FIG. 12A is a possible schematic structural diagram of the mobility management network element in the foregoing embodiments. A mobility management network element 1200 includes a processing unit 1202 and a communications unit 1203. Optionally, the mobility management network element 1200 may further include a storage unit 1201. The storage unit 1201 is configured to store a program. The communications unit 1203 is configured to communicate with another device. The processing unit 1202 is configured to execute the program in the storage unit 1201. When the program is executed, the processing unit is configured to perform steps performed by a mobility management network element in FIG. 1 to FIG. 9. For brevity, repeated descriptions are appropriately omitted.

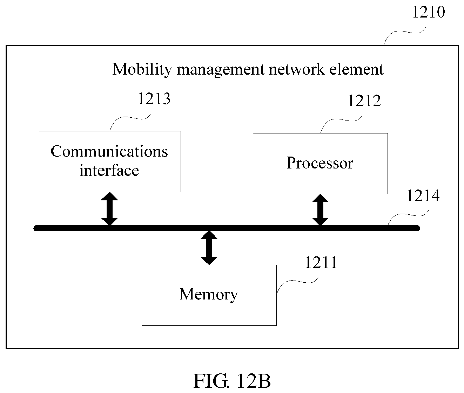

When the processing unit 1202 is a processor, the communications unit 1203 is a communications interface, and the storage unit 1201 is a memory, the mobility management network element in this embodiment of the present invention may be a mobility management network element shown in FIG. 12B. Referring to FIG. 12B, the mobility management network element 1210 includes a processor 1212, a communications interface 1213, a memory 1211, and a bus 1214. For brevity, repeated descriptions are appropriately omitted.

The processor configured to perform a function of the serving gateway, the packet gateway, or the mobility management network element in the foregoing embodiment of the present invention may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits that are described with reference to the content disclosed in the embodiments of the present invention. The processor may alternatively be a combination for implementing a computing function, for example, a combination of one or more microprocessors or a combination of a DSP and a microprocessor.

The methods or algorithm steps described with reference to the content disclosed in the embodiments of the present invention may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other form well known in the art. An example storage medium is coupled to the processor, so that the processor can read information from the storage medium, and can write information into the storage medium. Certainly, the storage medium may be a part of the processor. The processor and the storage medium may be located in an ASIC. In addition, the ASIC may be located in a gateway device or a mobility management network element. Certainly, the processor and the storage medium may exist in the gateway device or the mobility management network element as discrete components.

A person of skill in the art should be aware that in one or more of the foregoing examples, the functions described in the embodiments of the present invention may be implemented by using hardware, software, firmware, or any combination thereof. When the functions are implemented by software, these functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another. The storage medium may be any available medium accessible to a general-purpose or dedicated computer.

The objectives, technical solutions, and beneficial effects of the embodiments of the present invention are further described in detail in the foregoing specific implementations. It should be understood that, the foregoing descriptions are only specific implementations of the embodiments of the present invention, and are not intended to limit the protection scope of the embodiments of the present invention. Any modification, equivalent replacement, or improvement made based on the technical solutions in the embodiments of the present invention shall fall within the protection scope of the embodiments of the present invention.

## Claims

1. A resource access method, comprising:
receiving, by a serving gateway, an Internet Protocol, IP, packet of user equipment, UE, wherein the IP packet carries an IP address of a target server, the target server stores a resource to be accessed by the UE, and a first bearer corresponding to the UE exists between the serving gateway and a first packet gateway;
determining, by the serving gateway based on the IP address, a second packet gateway corresponding to the target server;
determining, by the serving gateway, a second bearer that is between the serving gateway and the second packet gateway and that corresponds to the UE; and
sending, by the serving gateway, an access request of the UE to the second packet gateway by using the second bearer, wherein the access request is used to request to access the resource stored in the target server.

2. The method according to claim 1, wherein the determining, by the serving gateway, a second bearer between the serving gateway and the second packet gateway comprises:
sending, by the serving gateway, a bearer setup request to the second packet gateway, wherein the bearer setup request is used to set up the second bearer; or
determining, by the serving gateway, the second bearer from at least two existing bearers, wherein the at least two existing bearers are bearers that are between the serving gateway and at least two packet gateways and that correspond to the UE.

3. The method according to claim 2, wherein the method further comprises:
receiving, by the serving gateway, an instruction message sent by a mobility management network element or the first packet gateway, wherein the instruction message carries an IP address of the second packet gateway, and the instruction message is used to instruct to set up the second bearer between the serving gateway and the second packet gateway.

4. The method according to any one of claims 1 to 3, wherein the method further comprises:
receiving, by the serving gateway, a dedicated bearer setup request sent by the second packet gateway, wherein the dedicated bearer setup request is used to request to set up a first dedicated bearer that is between the serving gateway and the second packet gateway and that corresponds to the UE;
setting up, by the serving gateway, the first dedicated bearer according to the dedicated bearer setup request; and
determining, by the serving gateway, a second dedicated bearer between the serving gateway and the UE.

5. The method according to claim 4, wherein the determining, by the serving gateway, a second dedicated bearer between the serving gateway and the UE comprises:
determining, by the serving gateway, that a dedicated bearer exists between the serving gateway and the UE, and determining the dedicated bearer as the second dedicated bearer; or
determining, by the serving gateway, that no dedicated bearer exists between the serving gateway and the UE, and setting up the second dedicated bearer.

6. The method according to claim 4 or 5, wherein the method further comprises:
receiving, by the serving gateway, a dedicated bearer modify request sent by the second packet gateway, wherein the dedicated bearer modify request is used to request to modify the first dedicated bearer;
modifying, by the serving gateway, the first dedicated bearer according to the dedicated bearer modify request; and
determining, by the serving gateway, that a dedicated bearer corresponding to the UE exists between the serving gateway and another packet gateway other than the second packet gateway, and modifying the dedicated bearer between the serving gateway and the another packet gateway other than the second packet gateway.

7. The method according to any one of claims 4 to 6, wherein the method further comprises:
receiving, by the serving gateway, a dedicated bearer delete request sent by the second packet gateway, wherein the dedicated bearer delete request is used to request to delete the first dedicated bearer;
deleting, by the serving gateway, the first dedicated bearer according to the dedicated bearer request; and
determining, by the serving gateway, that no dedicated bearer corresponding to the UE exists between the serving gateway and another packet gateway other than the second packet gateway, and deleting the second dedicated bearer.

8. A resource access method, comprising:
determining, by a second packet gateway, a second bearer that is between the second packet gateway and a serving gateway and that corresponds to user equipment UE, wherein a first bearer corresponding to the UE exists between the serving gateway and a first packet gateway; and
receiving, by the second packet gateway, an access request of the UE that is sent by the serving gateway by using the second bearer, wherein the access request is used to request to access a resource stored on a target server corresponding to the second packet gateway.

9. The method according to claim 8, wherein the determining, by a second packet gateway, a second bearer between the second packet gateway and a serving gateway comprises:
receiving, by the second packet gateway, a bearer setup request sent by the serving gateway, wherein the bearer setup request is used to request to set up the second bearer; and
setting up, by the second packet gateway, the second bearer according to the bearer setup request.

10. The method according to claim 8 or 9, wherein the method further comprises:
sending, by the second packet gateway, a dedicated bearer setup request to the serving gateway, wherein the dedicated bearer setup request is used to set up a first dedicated bearer that is between the serving gateway and the second packet gateway and that corresponds to the UE.

11. The method according to claim 10, wherein the method further comprises:
sending, by the second packet gateway, a dedicated bearer modify request to the serving gateway, wherein the dedicated bearer modify request is used to request to modify the first dedicated bearer.

12. The method according to claim 10 or 11, wherein the method further comprises:
sending, by the second packet gateway, a dedicated bearer delete request to the serving gateway, wherein the dedicated bearer delete request is used to request to delete the first dedicated bearer.

13. A serving gateway, comprising a processing unit and a communications unit, wherein
the processing unit is configured to: receive an Internet Protocol IP packet of user equipment UE by using the communications unit, wherein the IP packet carries an IP address of a target server, the target server stores a resource to be accessed by the UE, and a first bearer corresponding to the UE exists between the serving gateway and a first packet gateway; determine, based on the IP address, a second packet gateway corresponding to the target server; determine a second bearer that is between the serving gateway and the second packet gateway and that corresponds to the UE; and send an access request of the UE to the second packet gateway by using the communications unit and by using the second bearer, wherein the access request is used to request to access the resource stored on the target server.

14. The serving gateway according to claim 13, wherein the processing unit is specifically configured to send a bearer setup request to the second packet gateway by using the communications unit, and the bearer setup request is used to set up the second bearer; or the processing unit is specifically configured to determine the second bearer from at least two existing bearers, and the at least two existing bearers are bearers that are between the serving gateway and at least two packet gateways and that correspond to the UE.

15. The serving gateway according to claim 14, wherein the processing unit is further configured to receive, by using the communications unit, an instruction message sent by a mobility management network element or the first packet gateway, the instruction message carries an IP address of the second packet gateway, and the instruction message is used to instruct to set up the second bearer between the serving gateway and the second packet gateway.

16. The serving gateway according to any one of claims 13 to 15, wherein the processing unit is further configured to: receive, by using the communications unit, a dedicated bearer setup request sent by the second packet gateway, wherein the dedicated bearer setup request is used to request to set up a first dedicated bearer that is between the serving gateway and the second packet gateway and that corresponds to the UE; set up the first dedicated bearer according to the dedicated bearer setup request; and determine a second dedicated bearer between the serving gateway and the UE.

17. The serving gateway according to claim 16, wherein the processing unit is specifically configured to: determine that a dedicated bearer exists between the serving gateway and the UE, and determine the dedicated bearer as the second dedicated bearer; or the processing unit is specifically configured to: determine that no dedicated bearer exists between the serving gateway and the UE, and set up the second dedicated bearer.

18. The serving gateway according to claim 16 or 17, wherein the processing unit is further configured to: receive, by using the communications unit, a dedicated bearer modify request sent by the second packet gateway, wherein the dedicated bearer modify request is used to request to modify the first dedicated bearer; modify the first dedicated bearer according to the dedicated bearer modify request; and determine that a dedicated bearer corresponding to the UE exists between the serving gateway and another packet gateway other than the second packet gateway, and modify the dedicated bearer between the serving gateway and the another packet gateway other than the second packet gateway.

19. The serving gateway according to any one of claims 16 to 18, wherein the processing unit is further configured to: receive, by using the communications unit, a dedicated bearer delete request sent by the second packet gateway, wherein the dedicated bearer delete request is used to request to delete the first dedicated bearer; delete the first dedicated bearer according to the dedicated bearer request; and determine that no dedicated bearer corresponding to the UE exists between the serving gateway and another packet gateway other than the second packet gateway, and delete the second dedicated bearer.

20. A packet gateway, wherein the packet gateway is a second packet gateway, and comprises a processing unit and a communications unit; and
the processing unit is configured to: determine a second bearer that is between the second packet gateway and a serving gateway and that corresponds to user equipment UE, wherein a first bearer corresponding to the UE exists between the serving gateway and a first packet gateway; and receive, by using the communications unit, an access request of the UE that is sent by the serving gateway by using the second bearer, wherein the access request is used to request to access a resource stored on a target server corresponding to the second packet gateway.

21. The packet gateway according to claim 20, wherein the communications unit is specifically configured to: receive, by using the communications unit, a bearer setup request sent by the serving gateway, wherein the bearer setup request is used to request to set up the second bearer; and set up the second bearer according to the bearer setup request.

22. The packet gateway according to claim 20 or 21, wherein the processing unit is further configured to send a dedicated bearer setup request to the serving gateway by using the communications unit, and the dedicated bearer setup request is used to set up a first dedicated bearer that is between the serving gateway and the second packet gateway and that corresponds to the UE.

23. The packet gateway according to claim 22, wherein the processing unit is further configured to send a dedicated bearer modify request to the serving gateway by using the communications unit, and the dedicated bearer modify request is used to request to modify the first dedicated bearer.

24. The packet gateway according to claim 22 or 23, wherein the processing unit is further configured to send a dedicated bearer delete request to the serving gateway by using the communications unit, and the dedicated bearer delete request is used to request to delete the first dedicated bearer.

25. A communications system, comprising the serving gateway according to any one of claims 13 to 19 and the packet gateway according to any one of claims 20 to 24.
